# EUROPEAN PATENT APPLICATION

(11) **EP 4 691 876 A1**
(43) Date of publication of application: **11.02.2026**
(21) Application number: 24193035.3
(22) Date of filing: 06.08.2024
(51) Int. Cl.: B60W 40/068, B60W 10/08, B60W 10/184, B60W 50/00

(54) **METHOD FOR ESTIMATING A FRICTION PROPERTY OF A DRIVEABLE SURFACE CONTACTING A TIRE OF A VEHICLE DRIVING ON THE DRIVEABLE SURFACE, DATA PROCESSING APPARATUS, COMPUTER PROGRAM, COMPUTER-READABLE STORAGE MEDIUM, AND VEHICLE**

(71) Applicant: Volvo Car Corporation, 405 31 Göteborg (SE)
(72) Inventor: YANG, Derong, 40531 Göteborg (SE); JONASSON, Mats, 40531 Göteborg (SE)
(74) Representative: Maiwald GmbH

(57) **Abstract**

The disclosure relates to a method for estimating a friction property of a drivable surface (28) contacting a tire (36) of a vehicle (10) driving on the drivable surface (28). The method comprises obtaining first data (D1) indicative of a tire motion of the tire (36) of the vehicle (10) driving on the drivable surface (28), wherein the first data (D1) comprises a plurality of data items forming a time series. The method further comprises providing second data (D2) indicative of the friction property based on the first data (D1). Moreover, the disclosure is directed to a corresponding data processing apparatus (34), a corresponding computer program (46), a corresponding computer-readable storage medium (44) and a vehicle (10) comprising the data processing apparatus (34).

## Description

### TECHNICAL FIELD

The present disclosure relates to a method for estimating a friction property of a drivable surface.

Moreover, the disclosure relates to a corresponding data processing apparatus, a computer program, a computer-readable storage medium and a vehicle.

### BACKGROUND ART

A friction property of a surface drivable by a vehicle, e.g. a road or a parking lot, greatly influences a driving behavior of the vehicle. For example, sharp turns at high traveling speeds or abrupt braking maneuvers can only be executed safely provided that there is enough friction between the drivable surface and a tire of the vehicle. Otherwise, vehicle may slide.

In order that a human driver and/or an autonomous driver of the vehicle can execute adequate driving maneuvers, it is desirable to provide the human driver and/or the autonomous driver with an estimation of the friction property of the surface on which the vehicle is traveling. In case the human driver is supported by a driver assistance system, it is desirable to provide the driver assistance system with an estimation of the friction property of the surface on which the vehicle is travelling.

### SUMMARY

It is an objective of the present disclosure to improve known methods for estimating a friction property of a drivable surface. In particular, the estimation of the friction property shall be precise and reliable.

The problem is at least partially solved or alleviated by the subject matter of the SE:TOP independent claims of the present disclosure, wherein further examples are incorporated in the dependent claims.

According to a first aspect, there is provided a method for estimating a friction property of a drivable surface contacting a tire of a vehicle. The vehicle is driving on the drivable surface. The method comprises:
- obtaining first data indicative of a tire motion of the tire of the vehicle driving on the drivable surface, wherein the first data comprises a plurality of data items forming a time series, and
- providing second data indicative of the friction property based on the first data.

Obtaining first data is to be understood in the sense of receiving or determining the first data indicative of the tire motion of the tire of the vehicle driving on the drivable surface. in this context, first data indicative of a tire motion may as well be designated as first data indicative of a number of tire motion states. The fact that the data items of the first data form a time series means that the data items are obtained at consecutive points in time. Since the first data comprises a plurality of data items, the first data may be designated as a batch of data items. Based on this batch of data items forming the first data, the second data indicative of the friction property is provided. This means that the second data is provided not only based on one data item of the first data but based on a plurality of data items obtained consecutively during a predefined time period. This has the effect that the second data is particularly accurate and reliable. This is due to the fact that a potential inaccuracy of one data item of the first data may be compensated or at least alleviated by the remaining data items. Thus, a human driver or autonomous driver of the vehicle can rely on the estimated friction property and initiate adequate driving maneuvers. As has been mentioned before, the same applies to a driver assistance system supporting the human driver.

In an example, the data items of the first data relate to a time period of five seconds, i.e. the first data are indicative of the tire motion during five seconds. In another example, the data items of the first data relate to a time period of two seconds, i.e. the first data are indicative of the tire motion during two seconds. It has been found that such first data is sufficient for providing precise and reliable second data indicative of the friction property.

According to an example, the data items of the first data are obtained at a rate of 10 data items per second. In another example, the data items of the first data are obtained during the time period at a rate of 100 data items per second. It has been found that such first data is well suitable for providing precise and reliable second data indicative of the friction property.

In an example, the first data is indicative of at least one of a longitudinal tire force, a lateral tire force, a normal tire force, a longitudinal tire slip, and a lateral tire slip. The longitudinal tire force is a force acting at the interface between the drivable surface and the tire in a rolling direction of the tire. This is usually the force by which the vehicle is accelerated or decelerated in a driving direction of the vehicle. The lateral tire force is a force acting at the interface between the drivable surface and the tire in a direction perpendicular to the rolling direction of the tire and parallel to the drivable surface. This is usually the force that keeps the vehicle on its trajectory and that may cause lateral acceleration of the vehicle perpendicular to its driving direction during a turn. Correspondingly, the normal tire force is a force acting at the interface between the drivable surface and the tire in a direction normal to the drivable surface. The normal tire force is the force acting on the drivable surface through a tire that supports at least partially the weight of the vehicle. The longitudinal tire slip is defined as a relative motion in the rolling direction of the tire between the drivable surface and the tire in the contact area between the drivable surface and the tire. Accordingly, the lateral tire slip is defined as a relative motion perpendicular to the rolling direction of the tire but in a direction parallel to the drivable surface between the drivable surface and the tire in the contact area between the drivable surface and the tire. Said parameters relate to aspects of the tire motion which are relevant for estimating a friction property. All of these parameters may be quantified. Moreover, these parameters may be acquired in a comparatively simple and reliable manner, e.g. by force sensors at a wheel suspension and/or rotational speed sensors that determine a rotational speed of a wheel. Additionally or alternatively, said parameters may be acquired by torque sensors in a powertrain of the vehicle driving the wheel. Acquired torques may be translated into forces by dividing an acquired torque by a relevant lever arm, for example a radius of a wheel. Further additionally or alternatively, said parameters may be acquired by wheel suspension actuators.

In an example, the second data comprise at least one data item indicative of a friction coefficient acting between the drivable surface and the tire and at least one data item indicative of a confidence of the friction coefficient. Thus, the second data comprises at least two data items. The friction coefficient is a parameter that describes how much grip a tire can develop when in contact with the drivable surface. The friction coefficient is a function of the material of the tire and the material of the drivable surface. Thus, the second data provides a meaningful indication of the friction property to a human driver or an autonomous driver or a driver assistance system of the vehicle. The confidence of the friction coefficient indicates a degree of certainty or reliability of the friction coefficient to the human driver or to the autonomous driver or to the driver assistance system of the vehicle. Thus, a human driver or an autonomous driver or a driver assistance system of the vehicle is informed about the provided friction coefficient and can adapt its behavior based on the confidence of the friction coefficient. For example, a safety margin may be respected when planning or executing a driving maneuver of the vehicle, e.g. if the confidence of the friction coefficient is low.

In an example, the data item indicative of a friction coefficient is a mean value. Additionally or alternatively, the data item indicative of a friction coefficient is a median value. The mean value and/or the median value have the effect that the plurality of data items of the first data can representatively be condensed into few statistical values or one single statistical value characterizing the frictional behavior between the drivable surface and the tire. It is particularly simple and reliable for a human driver or an autonomous driver or a driver assistance system to adjust driving maneuvers of the vehicle to few representative parameters of the friction property or to a single representative parameter of the friction property.

In an example, the data item indicative of a confidence of the friction coefficient is a variance. The variance is a reliable statistical measure for the confidence, more precisely the scatter, of data. Hence, a low variance indicates a low scatter in the data items of the first data. This indicates a high confidence of the frictional property of the drivable surface. Thus, none or only a small safety margin may need to be considered when planning a driving maneuver of the vehicle. Likewise, a high variance indicates high scatter in the data items of the first data. This indicates a low confidence of the frictional property of the drivable surface. Thus, a large safety margin may need to be considered when planning a driving maneuver of the vehicle.

In an example, providing the second data comprises obtaining a plurality of data items indicative of a friction coefficient acting between the drivable surface and the tire. The plurality of data items indicative of a friction coefficient may be obtained based on the plurality of data items of the first data in a way that each data item of the first data is used for obtaining, e.g. determining, one data item indicative of a friction coefficient. In other words, the plurality of data items indicative of the friction coefficient may also form a time series that is based on the time series of the data items of the first data. This time series of data items indicative of a friction coefficient may span over the same time period as the time series of data items indicative of a tire motion. Moreover, the time series of data items indicative of a friction coefficient may be provided at the same rate as the time series of data items indicative of a tire motion. Providing the second data as consolidated data based on a plurality of data items indicative of the friction coefficient has the effect that the second data is particularly reliable in the sense that a confidence of the second data is increased compared to individual data items of the plurality of data items indicative of the friction coefficient. This enhances road safety when a human driver or an autonomous driver or a driver assistance system of the vehicle adapts its driving maneuvers based on the second data.

In an example, providing the second data comprises weighing the plurality of data items indicative of a friction coefficient. This means that a weight is assigned to each data item of the plurality of data items indicative of the friction coefficient. Each weight of each data item may be determined based on the data item of the first data that is used for providing the data item indicative of the friction coefficient. Additionally or alternatively, each weight may be determined based on a statistical indicator, such as a statistical confidence indicator, associated with the data item indicative of the friction coefficient. In an example, the weight may be particularly high if a data item of the first data indicates a high degree of excitation of the tire. In another example, the weight may be particularly low if the data item of the first data indicates a low degree of excitation of the tire. The excitation of the tire may be understood as a deformation of the tire in the contact area between the tire and the drivable surface due to longitudinal tire forces and/or lateral tire forces. At high degrees of tire excitation, the tire makes use of its full grip potential on the drivable surface. Thus, a data item indicative of the friction coefficient corresponding to a data item of the first data obtained at a high degree of tire excitation provides a more realistic indication of the true frictional behavior of the tire on the drivable surface. A data item indicative of the friction coefficient corresponding to the data item of the first data obtained at a low degree of tire excitation provides a less realistic indication that may come with greater deviation from the true frictional behavior of the tire on the drivable surface. Hence, assigning higher weights to data items indicative of the friction coefficient that are more likely to provide an indication of the true frictional behavior of the tire on the drivable surface provides a higher accuracy of the second data. The same applies if the weights are determined based on a statistical confidence indicator. This means that a comparatively high weight may be assigned to data items associated with a comparatively high statistical confidence. Comparatively low weights may be assigned to data items associated with a comparatively low statistical confidence.

In an example, obtaining the first data comprises filtering or pre-processing the first data. Filtering or pre-processing the first data enhances a quality of the first data and, thus, also the second data indicative of the friction property, which may be based on the filtered or pre-processed first data.

In an example, filtering or pre-processing the first data comprises assessing a validity of one or more data items of the first data with respect to a tire model and ignoring data items having a validity lower than a predefined validity threshold. A tire model may be applied to convert a first portion of data items of the first data into a second portion of data items of the first data. Such a tire model may be subject to constraints and/or boundary conditions within which it provides meaningful results. The validity of a data item of the first data is therefore understood as a degree of compatibility of that data item with at least one constraint and/or at least one boundary condition of the applied tire model. For instance, a tire model may only provide a meaningful estimation of a frictional property between the tire and the drivable surface if the tire slip between the tire and the drivable surface is below a predefined upper tire slip threshold. The same tire model may also be subject to a boundary condition of a predefined lower tire slip threshold. Hence, if a data item of the first data lies outside the predefined thresholds, that data item may be assigned a low validity. If the assigned validity is lower than the predefined validity threshold, that data item is ignored. Thus, the quality of the first data and, also the second data indicative of the friction property is enhanced.

Additionally or alternatively, filtering or pre-processing the first data comprises assessing a consistency of one or more data items of the first data and ignoring data items having a consistency lower than a predefined consistency threshold. The consistency of a data item of the first data is to be understood in the context of the other data items of the first data. In other words, for assessing the consistency, one data item may be compared to all other data items of the first data or to a portion of other data items of the first data. For example, an algebraic sign of a particular data item of the first data may be different from the algebraic sign of the other data items of the first data. Thus, the consistency of that particular data item of the first data with respect to the other data items of the first data may be determined to be below a predefined consistency threshold. In another example, a direction of the obtained longitudinal tire force may be different or even opposite to a direction of the tire slip between the tire and the drive of the surface obtained at the same point in time as said longitudinal tire force. Thus, the direction of the obtained longitudinal tire force is inconsistent with the direction of the obtained tire slip and therefore below the predefined consistency threshold. In other words, assessing a consistency of one or more data items of the first data comprises checking for a plausibility of the one or more data items of the first data in the context of the other data items of the first data. Thus, the quality of the first data and, also the second data indicative of the friction property is enhanced.

Additionally or alternatively, filtering or pre-processing the first data comprises assessing a variance of one or more data items of the first data and ignoring data items having a variance higher than a predefined variance threshold. The variance of one or more data items of first data comprises a distance measure of the one or more data items to a mean or a median of the data items of the first data. In case a data item of the first data lies further away from the mean or the median of the data items of the first data than the predefined variance threshold, that data item of the first data is ignored when providing the second data. Thus, the quality of the first data and, also the second data indicative of the friction property is enhanced.

Additionally or alternatively, filtering or pre-processing the first data comprises low-pass filtering the first data and/or high-pass filtering the first data. Low-pass filtering is to be understood as removing or ignoring data items of the first data that are below a lower filtering threshold. This way, data items representing states of excitation of the tire with too low tire slip may not be considered when providing the second data. This is particularly desirable because a maximum frictional property of the tire on the drivable surface can only be determined at a sufficient degree of tire slip. High-pass filtering is to be understood as removing or ignoring data items of the first data that are above an upper filtering threshold. This way, data items representing states of excitation of the tire with extremely high tire slip may be ignored when providing the second data. At extremely high tire slip, the frictional properties between the tire and the drivable surface are diminished compared to the maximum frictional property. Thus, by applying the low-pass filtering and the high-pass filtering, second data representing the maximum frictional property between the tire and the drivable surface as closely as possible may be obtained. Thus, the quality of the first data and, also the second data indicative of the friction property is enhanced.

In an example, obtaining the first data comprises applying a tire model. The tire model may be helpful to convert one portion of data items of the first data into a second portion of data items of the first data, wherein the latter may be more useful for providing the second data indicative of the friction coefficient between the tire and the drivable surface. The tire model may be a physics model or a trained data model. The physics model may be a linear or non-linear analytical model or a model based on differential equations. The trained data model may be a regression model, a support vector machine or a neural network. Altogether, providing the second data is facilitated.

In an example, the method further comprises causing an application of a probing torque to the tire of the vehicle, wherein the first data is obtained during the application of the probing torque. The probing torque may be applied by a brake associated with the tire or by a motor associated with the tire. To apply the probing torque, the motor may either accelerate or decelerate in a predefined manner. Preferably, the motor is an electric machine. Applying the probing torque has the effect that a degree of tire excitation suitable for estimating a friction property of a drivable surface contacting a tire may be created. In this context, suitable may be understood as above a predefined lower excitation threshold and below a predefined upper excitation threshold. Thus, an accuracy of the second data indicative of the friction property, which is based on the first data, is increased.

In an example, the application of the probing torque to the tire of the vehicle may involve applying a torque on one tire of the vehicle and an additional torque oriented in the opposite direction on one or more of the other tires of the vehicle. In this manner, an overall driving torque of the vehicle may remain unchanged during application of the probing torque. This has the effect that a passenger of the vehicle may experience a smooth ride without any acceleration or deceleration while executing the method for estimating a friction property of the drivable surface contacting the tire of the vehicle.

The method may be at least partly computer-implemented, and may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

According to a second aspect, there is provided a data processing apparatus comprising means for carrying out the method of the first aspect. Using such a data processing apparatus, the friction property of the drivable surface contacting the tire of the vehicle driving on the drivable surface may be estimated in a reliable manner. Particularly, the data processing apparatus allows obtaining first data indicative of the tire motion of the tire of the vehicle driving on the drivable surface. The first data comprises a plurality of data items forming a time series. Moreover, the data processing apparatus provides second data indicative of the friction property based on the first data. In other words, a batch of data items of first data is obtained by the data processing apparatus. Based on this batch of data items of the first data, the second data indicative of the friction property is provided by the data processing apparatus. This has the effect that the second data indicative of the friction property is provided not only based on one data item of the first data but based on a plurality of data items obtained consecutively during a predefined time period. This has the effect that the estimate of the friction property provided by the data processing apparatus is particularly accurate and reliable. This is due to the fact that a potential inaccuracy of one data item of the first data may be compensated or at least alleviated by the remaining data items. Thus, a human driver or autonomous driver or a driver assistance system of the vehicle can rely on the estimated friction property and initiate adequate driving maneuvers. As has been mentioned before, the same applies to a driver assistance system supporting the human driver.

According to a third aspect, there is provided a computer program comprising instructions which, when the computer program is executed by a computer, cause the computer to carry out the method of the first aspect. Using such a computer program, the friction property of the drivable surface contacting the tire of the vehicle driving on the drivable surface may be estimated in a reliable manner. Particularly, the computer program allows obtaining first data indicative of the tire motion of the tire of the vehicle driving on the drivable surface. The first data comprises a plurality of data items forming a time series. Moreover, the computer program provides second data indicative of the friction property based on the first data. In other words, a batch of data items of first data is obtained by the computer program. Based on this batch of data items of the first data, the second data indicative of the friction property is provided by the computer program. This has the effect that the second data indicative of the friction property is provided not only based on one data item of the first data but based on a plurality of data items obtained consecutively during a predefined time period. This has the effect that the estimate of the friction property provided by the computer program is particularly accurate and reliable. This is due to the fact that a potential inaccuracy of one data item of the first data may be compensated or at least alleviated by the remaining data items. Thus, a human driver or autonomous driver or driver assistance system of the vehicle can rely on the estimated friction property and initiate adequate driving maneuvers. As has been mentioned before, the same applies to a driver assistance system supporting the human driver.

According to a fourth aspect, there is provided a computer-readable storage medium comprising instructions which, when executed by a computer, cause the computer to carry out the method of the first aspect. Using such a computer-readable storage medium, the friction property of the drivable surface contacting the tire of the vehicle driving on the drivable surface may be estimated in a reliable manner. Particularly, the computer-readable storage medium allows obtaining first data indicative of the tire motion of the tire of the vehicle driving on the drivable surface. The first data comprises a plurality of data items forming a time series. Moreover, the second data indicative of the friction property are provided based on the first data. In other words, a batch of data items of first data is obtained. Based on this batch of data items of the first data, the second data indicative of the friction property is provided. This has the effect that the second data indicative of the friction property is provided not only based on one data item of the first data but based on a plurality of data items obtained consecutively during a predefined time period. This has the effect that the estimate of the friction property provided by the data processing apparatus is particularly accurate and reliable. This is due to the fact that a potential inaccuracy of one data item of the first data may be compensated or at least alleviated by the remaining data items. Thus, a human driver or autonomous driver or driver assistance system of the vehicle can rely on the estimated friction property and initiate adequate driving maneuvers. As has been mentioned before, the same applies to a driver assistance system supporting the human driver.

According to a fifth aspect, there is provided a vehicle comprising a data processing apparatus according to the second aspect. Providing such a vehicle allows estimating the friction property of the drivable surface contacting the tire of the vehicle driving on the drivable surface in a reliable manner. Particularly, the vehicle allows obtaining first data indicative of the tire motion of the tire of the vehicle driving on the drivable surface. The first data comprises a plurality of data items forming a time series. Moreover, the second data indicative of the friction property are provided based on the first data. In other words, a batch of data items of first data is obtained. Based on this batch of data items of the first data, the second data indicative of the friction property is provided. This has the effect that the second data indicative of the friction property is provided not only based on one data item of the first data but based on a plurality of data items obtained consecutively during a predefined time period. This has the effect that the estimate of the friction property provided by the data processing apparatus of the vehicle is particularly accurate and reliable. This is due to the fact that a potential inaccuracy of one data item of the first data may be compensated or at least alleviated by the remaining data items. Thus, a human or autonomous driver of the vehicle can rely on the estimated friction property and initiate adequate driving maneuvers. As has been mentioned before, the same applies to a driver assistance system supporting the human driver.

It should be noted that the above examples may be combined with each other irrespective of the aspect involved.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a vehicle according to the present disclosure comprising a data processing apparatus according to the present disclosure for executing a method according to the present disclosure for estimating a friction property of a drivable surface contacting a tire of the vehicle, wherein the vehicle is driving on the drivable surface,
- Figure 2: shows a magnified view of a front wheel of the vehicle of Figure 1, and
- Figure 3: illustrates steps of a method according to the present disclosure for estimating a friction property of a drivable surface contacting a tire of a vehicle driving on the drivable surface.

### DETAILED DESCRIPTION

The Figures are merely schematic representations and serve only to illustrate examples of the disclosure. Identical or equivalent elements are in principle provided with the same reference signs.

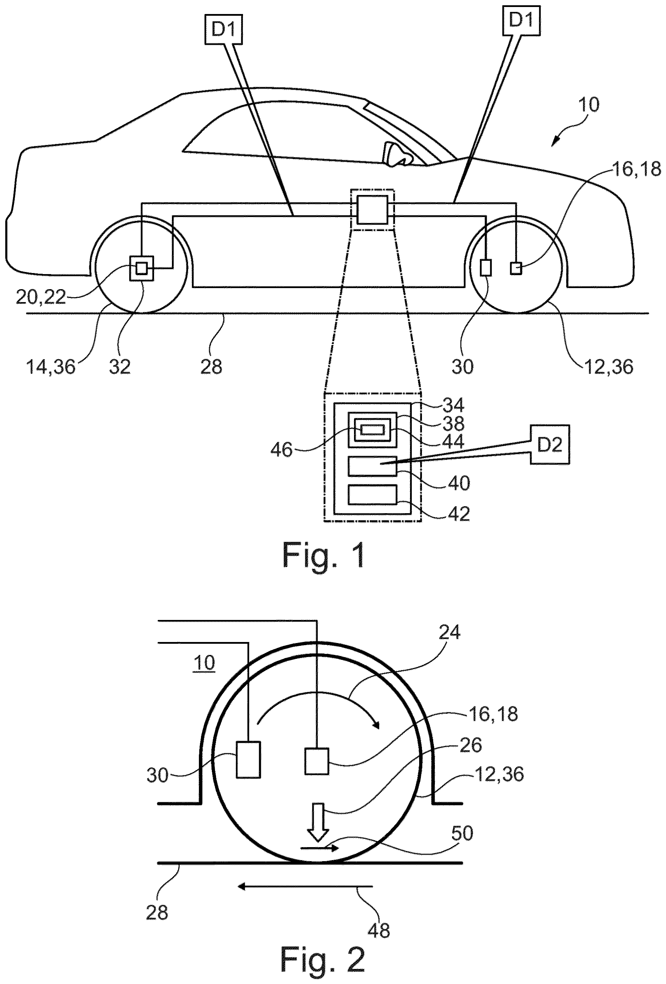

Figure 1 shows a vehicle 10.

The vehicle 10 comprises two front wheels 12 and two rear wheels 14, whereof only one front wheel 12 and only one rear wheel 14 are shown.

The vehicle 10 further comprises a first rotational speed sensor 16 and a first force sensor 18 at a suspension of the shown front wheel 12.

Moreover, the vehicle comprises a second rotational speed sensor 20 and a second force sensor 22 at a suspension of the shown rear wheel 14.

The first force sensor 18 and/or the second force sensor 22 may be configured to measure forces directly. Alternatively, the first force sensor 18 and/or the second force sensor 22 may comprise a respective torque sensor. In the latter alternative, a force may be obtained from a measured torque by a division through a relevant lever arm, for example a radius of the associated wheel 12, 14.

Both rotational speed sensors 16, 20 are configured to indicate a rotational speed 24 of the respective wheel 12, 14 of the vehicle 10.

Both force sensors 18, 22 are configured to indicate a normal tire force 26 by which the vehicle 10 is supported on a drivable surface 28 by the respective wheel 12, 14.

Moreover, the vehicle 10 comprises a brake 30 at the shown front wheel 12 and an electric machine 32 at the shown rear wheel 14.

It is noted that the components of the vehicle are only represented in a schematic manner. Moreover, the vehicle 10 may as well comprise a brake at the rear wheel 14. However, this brake is not shown for the ease of explanation.

Moreover, it is to be understood that the vehicle 10 may as well comprise the same components that have been explained in connection with the shown front wheel 12 and the shown rear wheel 14 at all other road wheels of the vehicle.

Furthermore, the vehicle 10 comprises a data processing apparatus 34.

The first rotational speed sensor 16, the first force sensor 18, the second rotational speed sensor 20, the second force sensor 22, the brake 30 and the electric machine 32 are communicatively connected to the data processing apparatus 34.

Apart from the specific use of the rotational speed sensors 16, 20 within a method for estimating a friction property of the drivable surface 28 contacting a tire 36 of the vehicle 10 driving on the drivable surface 28 according to the present disclosure, the rotational speed sensors 16, 20 may also be used in a commonly known electronic stability program (ESP) of the vehicle 10. The brake 30 may also be used in conjunction with the rotational speed sensors 16, 20 in a conventional anti-lock braking system (ABS) of the vehicle 10.

The data processing apparatus 34 comprises a data storage unit 38, a data processing unit 40 and a torque controller 42.

The data storage unit 38 comprises a computer readable storage medium 44.

On the computer readable storage medium 44, there is provided a computer program 46.

The computer program 46 and, thus, also the computer readable storage medium 44, comprise instructions which, when executed by the data processing unit 40, or, more generally speaking, a computer, cause the computer or the data processing unit 40 to carry out the method for estimating a friction property of a drivable surface 28 contacting a tire 36 of the vehicle 10. The vehicle drives on the drivable surface 28.

Consequently, the data storage unit 38 and the data processing unit 40 form means for carrying out the method for estimating a friction property of a drivable surface 28 contacting a tire 36 of the vehicle 10 driving on the drivable surface 28.

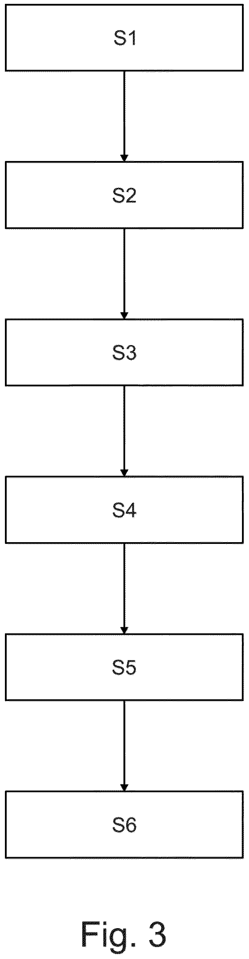

An exemplary illustration of steps of the method for estimating a friction property of a drivable surface 28 contacting a tire 36 of the vehicle 10 driving on the drivable surface 28 is given in Figure 3.

In step S1 of the method, the torque controller 42, which in the present example forms part of the data processing apparatus 34, addresses the brake 30 and/or the electric machine 32 to apply a probing torque to a tire 36 of the vehicle 10.

The application of the probing torque is caused by the computer program 46 stored on the computer-readable storage medium 44 and executed by the data processing unit 40 of the data processing apparatus 34.

In other examples, it is conceivable that the torque controller 42 forms an entity separate from the data processing apparatus 34.

In the present example, the torque controller 42 addresses both the brake 30 at the shown front wheel 12 and the electric machine 32 at the shown rear wheel 14.

The torque controller 42 activates the brake 30 at the front wheel 12, which creates a decelerating torque at the front wheel 12. At the same time, the torque controller 42 requests the electric machine 32 at the rear wheel 14 to provide additional torque to accelerate the vehicle 10. This way, an overall torque acting on the vehicle 10 remains unchanged and passengers inside a cabin of the vehicle 10 do not notice the application of the probing torque as part of the method for estimating a friction property of the drivable surface 28.

In another example that is not illustrated herein, the decelerating torque at the front wheel 12 may also be created by an electric machine 32 that would normally drive the vehicle 10.

During a time period of application of the probing torque, first data D1 indicative of a tire motion of the tire 36 of the vehicle 10 driving on the drivable surface 28 is obtained (S2).

The tire motion of the tire 36 of the front wheel 12 of the vehicle 10 is explained using the magnified view in Figure 2.

Due to the decelerating moment created by the activated brake 30, the rotational speed 24 of the front wheel 12 is reduced.

However, the drivable surface 28 moves at an unchanged speed 48 relative to the tire 36 of the front wheel 12 due to the accelerating moment at the rear wheel 14.

This causes the tire 36 of the front wheel 12 to slip along a longitudinal direction of the tire 36. The slip is illustrated by an arrow 50.

Due to the normal tire force 26 acting onto the drivable surface 28 through the tire 36, a frictional force is created at the interface between the tire 36 and the drivable surface 28 that acts to decelerate the vehicle 10.

At the rear wheel 14, the additional torque applied by the electric machine 32 causes an increase in rotational speed 24 of the rear wheel 14.

This also induces a longitudinal slip 50 of the tire 36 of the rear wheel 14 with respect to the drivable surface 28 and a frictional force is created at the interface between the tire 36 and the drivable surface 28 that acts to accelerate the vehicle 10.

The torque controller 42 is designed such that the frictional force created at the front wheel 12 acting to decelerate the vehicle 10 is equal to the frictional force created at the rear wheel 14 acting to accelerate the vehicle 10. Thus, an equilibrium of forces and an equilibrium of torques is maintained and the vehicle 10 does not accelerate or decelerate due to the probing torque if the vehicle 10 is considered as a whole.

In the present example, the first data D1 comprise a time series of data items indicative of a normal tire force 26 and a longitudinal tire slip 50.

The longitudinal tire slip 50 may be obtained from the different rotational speeds 24 of the front wheel 12 and of the rear wheel 14.

The portion of the longitudinal tire slip 50 occurring at the front wheel 12 and the portion of the longitudinal tire slip 50 occurring at the rear wheel 14 may be obtained from the difference in rotational speeds 24 of the front wheel 12 and of the rear wheel 14 in conjunction with an assumption that the portions of the respective longitudinal tire slips 50 are inversely proportional to the normal tire force 26 acting on the respective tire 36.

However, it is also conceivable to apply a more elaborate tire model as described below for the determination of how much longitudinal tire slip 50 occurs at the front wheel 12 and of how much longitudinal tire slip 50 occurs at the rear wheel 14.

In other examples not illustrated in the figures, it is also conceivable that there is only a first rotational speed sensor 16 attached to one of the wheels 12, 14. An absolute driving speed of the vehicle 10 can be obtained from a GPS signal or from a radar sensor or from an odometer. The extent of longitudinal tire slip 50 occurring at that a wheel can then be determined from a difference between the absolute driving speed of the vehicle 10 and a circumferential speed of that wheel. The latter can be calculated based on a detection result of the rotational speed sensor 16.

Further in another example not illustrated in the figures, it is possible that additionally or alternatively to the normal tire force 26, a longitudinal and/or a lateral tire force are indicated by at least one of the force sensors 18, 22 at the suspensions of the wheels 12, 14 of the vehicle 10 driving on the drivable surface 28. These parameters may also form part of the time series of data items of the first data D1.

As already mentioned above, the force sensors 18, 22 may comprise a respective torque sensor. A force may be obtained from a measured torque by a division through the relevant lever arm.

In a third step S3 of the method, the first data D1 is filtered or pre-processed.

Filtering or pre-processing the first data D1 may involve assessing a validity of data items of the first data D1 with respect to a tire model.

A tire model may be used to obtain a time series of friction coefficients from the time series of data items of the first data D1.

Data items of the first data D1 may not be compatible with constraints or boundary conditions of the tire model. For example, a tire model may only be valid given a minimum tire force and/or given a minimum and maximum tire slip.

In such a case, the respective data items are designated as invalid and are ignored. Thus, these data items will not be sued when providing the time series of friction coefficients that is based on the first data D1 as will be explained in more detail further below.

Filtering or pre-processing the first data D1 may also involve assessing a consistency of data items of the first data D1.

The consistency of data items of the first data D1 is assessed within the context of the remaining data items of the first data D1 other than the data item that is being assessed for consistency.

A data item, for example a value of a tire slip and/or a value of a tire force, may have a different algebraic sign than a majority of the other data items of the first data D1. Also, an algebraic sign of a tire slip may indicate an opposite direction of a tire force than actually obtained by the data processing apparatus 34.

In these cases, the respective data items may be designated as inconsistent and may therefore be ignored when providing the time series of friction coefficients based on the first data D1.

Moreover, filtering or pre-processing the first data D1 may involve assessing a variance of data items of the first data D1.

The variance comprises a distance measure of a data item of the first data D1 from the mean and/or from the median of the remaining data items of the first data D1.

An absolute variance threshold or a relative variance threshold, for instance a variance threshold with respect to a standard deviation of data items of the first data D 1, may be defined to distinguish between data items that are factored in and other data items that are ignored when providing the time series of friction coefficients based on the first data D1.

Furthermore, filtering or pre-processing the first data D1 may comprise low-pass filtering the first data D1 and high-pass filtering the first data D1.

Thus, only the data items of the first data D1 that are between a lower filtering threshold and an upper filtering threshold are considered when providing the time series of friction coefficients based on the first data D1.

The filtered and pre-processed data items of the first data D1 are converted into friction coefficients characterizing the frictional interaction between the tire 36 of the vehicle 10 and the drivable surface 28 on which the vehicle 10 is driving.

For this conversion, a tire model is applied (S4).

In the present example, a physical friction model is applied that comprises a linear relation between the normal tire force 26 and a frictional force between the tire 36 and the drivable surface 28. The linear factor between the normal tire force 26 and the frictional force is the friction coefficient.

In the present example, the normal tire forces 26 are known from the force sensors 18, 22. The frictional force between a tire 36 and the drivable surface 28 is known from to the decelerating moment applied by the brake 30 and the compensating accelerating moment applied by the electric machine 32, as controlled by the torque controller 42, and a diameter of the front wheel 12 and of the rear wheel 14.

Note that in the present example, the frictional force acting at the front wheel 12 to decelerate the vehicle 10 and the frictional force acting at the rear wheel 14 to accelerate the vehicle 10 cancel out. Thus, the absolute value of the frictional force acting at the front wheel 12 is at least theoretically equal to the absolute value of the frictional force acting at the rear wheel 14.

Due to the front wheel 12 and the rear wheel 14 having the same diameter, the braking moment applied by the brake 30 and the additional moment applied by the electric machine 32 are of the same absolute value.

In other examples not discussed herein, the tire model may comprise nonlinear relations between a normal tire force 26 and a longitudinal tire force and/or a lateral tire force. For instance, the tire model may comprise modelling the tire as a brush.

In a fifth step S5 of the method, the friction coefficients of the time series of friction coefficients obtained from the tire model based on the filtered time series of data items of the first data D1 are weighed.

In the present example, each friction coefficient is weighed based on the values of longitudinal tire slip 50 and normal tire forces 26 that have contributed to the provision of a particular coefficient of friction.

Low values of tire slip and/or tire forces lead to low weights of the corresponding coefficients of friction.

Higher values of tire slip and/or tire forces lead to high weights of the corresponding coefficients of friction.

Extremely high values of tire slip and/or tire forces again lead to low weights of the corresponding coefficients of friction.

The notion behind this concept of weighing is that a determined friction coefficient is assumed to approximate a true friction coefficient between a tire 36 of the vehicle 10 and the drivable surface 28 best, if the tire 36 is sufficiently excited, e.g. deformed. However, if the tire 36 exhibits excessive sliding on the drivable surface 28, it has been observed that a determined friction coefficient underestimates a true friction coefficient between the tire 36 of the vehicle 10 and the drivable surface 28.

In a sixth step S6 of the method, a mean and/or median friction coefficient of the weighed friction coefficients obtained from the tire model may be determined as second data D2. Additionally, a measure of confidence of the mean and/or the median friction coefficient may be obtained as second data D2.

In the present example, the mean value of the friction coefficients is determined under consideration of their assigned weights. Thus, the means value may be designated as a weighted average.

As a measure of confidence of the mean friction coefficient, the variance of the friction coefficients is determined under consideration of their assigned weights.

Thus, in the present example, second data D2 comprising a mean friction coefficient and a variance as a confidence measure of the mean friction coefficient is provided.

This enables a human driver or an autonomous driver or a driver assistance system of the vehicle 10 to select adequate driving maneuvers, e.g. turning at a specific travelling speed or braking causing a specific rate of deceleration, based on the second data D2 without a risk of excessive and uncontrollable sliding of the vehicle 10 on the drivable surface 28.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: vehicle
- 12: front wheel
- 14: rear wheel
- 16: first rotational speed sensor
- 18: first force sensor
- 20: second rotational speed sensor
- 22: second force sensor
- 24: rotational speed
- 26: normal tire force
- 28: drivable surface
- 30: brake
- 32: electric machine
- 34: data processing apparatus
- 36: tire
- 38: data storage unit
- 40: data processing unit
- 42: torque controller
- 44: computer-readable storage medium
- 46: computer program
- 48: relative speed between tire and drivable surface
- 50: longitudinal tire slip

- D1: first data
- D2: second data

## Claims

1. A method for estimating a friction property of a drivable surface (28) contacting a tire (36) of a vehicle (10), the vehicle driving on the drivable surface (28), the method comprising:
- obtaining first data (D1) indicative of a tire motion of the tire (36) of the vehicle (10) driving on the drivable surface (28) (S2), wherein the first data (D1) comprises a plurality of data items forming a time series, and
- providing second data (D2) indicative of the friction property based on the first data (D1) (S6).

2. The method of claim 1, wherein the first data (D1) is indicative of at least one of a longitudinal tire force, a lateral tire force, a normal tire force (26), a longitudinal tire slip (50), and a lateral tire slip.

3. The method of claim 1 or 2, wherein the second data (D2) comprise at least one data item indicative of a friction coefficient acting between the drivable surface (28) and the tire (36) and at least one data item indicative of a confidence of the friction coefficient.

4. The method according to claim 3, wherein the data item indicative of a friction coefficient is a mean value and/or a median value.

5. The method according to claim 3 or 4, wherein the data item indicative of a confidence of the friction coefficient is a variance.

6. The method of any one of claims 3 to 5, wherein providing the second data (D2) comprises obtaining a plurality of data items indicative of a friction coefficient acting between the drivable surface (28) and the tire (36) (S4).

7. The method of claim 6, wherein providing the second data (D2) comprises weighing the plurality of data items indicative of a friction coefficient (S5).

8. The method of any one of the preceding claims, wherein obtaining the first data (D1) comprises filtering or pre-processing the first data (D1) (S3).

9. The method of claim 8, wherein filtering or pre-processing the first data (D1) comprises assessing a validity of one or more data items of the first data (D1) with respect to a tire model and ignoring data items having a validity lower than a predefined validity threshold and/or
wherein filtering or pre-processing the first data (D1) comprises assessing a consistency of one or more data items of the first data (D1) and ignoring data items having a consistency lower than a predefined consistency threshold and/or
wherein filtering or pre-processing the first data (D1) comprises assessing a variance of one or more data items of the first data (D1) and ignoring data items having a variance higher than a predefined variance threshold and/or
wherein filtering or pre-processing the first data (D1) comprises low-pass filtering the first data (D1) and/or high-pass filtering the first data (D1).

10. The method of any one of the preceding claims, wherein obtaining the first data (D1) comprises applying a tire model.

11. The method according to any of the preceding claims, further comprising causing an application of a probing torque to the tire (36) of the vehicle (10) (S1), wherein the first data (D1) is obtained during the application of the probing torque.

12. A data processing apparatus (34) comprising means for carrying out the method of any one of the preceding claims.

13. A computer program (46) comprising instructions which, when the computer program (46) is executed by a computer, cause the computer to carry out the method of claims 1 to 11.

14. A computer-readable storage medium (44) comprising instructions which, when executed by a computer, cause the computer to carry out the method of claims 1 to 11.

15. A vehicle (10) comprising a data processing apparatus (34) according to claim 12.
